# EUROPÄISCHE PATENTANMELDUNG

(11) **EP 0 769 343 A2**
(43) Veröffentlichungstag der Anmeldung: **23.04.1997**
(21) Anmeldenummer: 96116558.6
(22) Anmeldetag: 16.10.1996
(51) Int. Cl.: B23K 9/095

(54) **Lichtbogenschweissgerät mit einem wechselstromgespeisten Gleichrichter**

(30) Priorität: 20.10.1995 DE 19539038
(71) Anmelder: EWM High-Tech Precision Schweisstechnik GmbH, 56271 Mündersbach/Westerwald (DE)
(72) Erfinder: Szczesny, Michael, D-56271 Mündersbach/ Westerwald (DE)
(74) Vertreter: Cohausz & Florack

(57) **Zusammenfassung**

Die Erfindung betrifft ein Lichtbogenschweißgerät mit einem wechselstromgespeisten Gleichrichter (1), der über einen Zwischenkreis (2) ein Leistungsteil (3) versorgt, dem Führungsgrößen (F) vorgebbar sind, wobei das Leistungsteil als Energiequelle zur Versorgung des Schweißprozesses (4) mit Prozeßgrößen (U_{ist,}Iᵢₛₜ) arbeitet und wobei unter Berücksichtigung der gemessenen Prozeßgrößen (U_{ist,}Iᵢₛₜ) und von Prozeßparametern die Führungsgrößen (F) über eine Regeleinrichtung vorgebbar sind. Um eine einfache Anpassung der Regelung an praktisch beliebige unterschiedliche Schweißprozesse zu ermöglichen, ist vorgesehen, daß die Regeleinrichtung durch ein intelligentes Schweißprozeßführungssystem (5) gebildet ist, welches ein mit einem Lernverfahren (L) ausgestattetes Generierungssystem (N) aufweist, in das vorgebbare Güteanforderungen (G) in Bezug auf die Regelung des Schweißprozesses übernehmbar sind, wobei das intelligente Schweißprozeßführungssystem (5) in einer ersten Betriebsart (Trainingsphase) an einen Schweißprozeß (4) koppelbar ist derart, daß selbständig oder durch Ablernen von einem externen Schweißprozeß (E) ein Prozeßführungs- bzw. Regelalgorithmus generierbar und selbständig in der durch das Schweißprozeßführungssystem gebildeten Regelung konfigurierbar ist, und wobei das intelligente Schweißprozeßführungssystem (5) in einer zweiten Betriebsart (Arbeitsphase) als zum Leistungsteil (3) rückgekoppeltes Regelsystem mit dem erlernten Regelverhalten die Prozeßführung durch Vorgabe der Führungsgrößen (F) übernimmt.

## Beschreibung

Die Erfindung betrifft ein Lichtbogenschweißgerät mit einem wechselstromgespeisten Gleichrichter sowie ein Verfahren zu seinem Betrieb, wobei der Gleichrichter über einen Zwischenkreis ein Leistungsteil versorgt, dem Führungsgrößen vorgebbar sind, wobei das Leistungsteil als Energiequelle zur Versorgung des Schweißprozesses mit Prozeßgrößen dient und wobei unter Berücksichtigung der gemessenen Prozeßgrößen und von Prozeßparametern die Führungsgrößen eine Regeleinrichtung vorgebbar sind.

Ein solches Schweißgerät ist aus der deutschen Patentschrift 38 04 387 bzw. 38 03 447 bekannt. Bei diesem bekannten Lichtbogenschweißgerät werden die von dem Leistungsteil als Energiequelle zur Verfügung gestellten Prozeßgrößen gemessen, als Eingangsgrößen auf eine Regelung geführt, wobei die Regelung unter Berücksichtigung vorgebbarer Prozeßparameter, wie Elektrodenmaterial, Schweißgas, Drahtdurchmesser oder Drahtvorschubgeschwindigkeit, an ihrem Ausgang die Führungsgrößen für das Leistungsteil als Sollwerte erzeugt. Die Regelcharakteristik des Regelkreises hat dabei entsprechend üblicher Analog-Regelverfahren P-,PI- oder PID-Verhalten. Die Abstimmung des Regelverhaltens muß jeweils an den gewünschten Schweißprozeß angepaßt erfolgen.

Aus dem deutschen Patent 32 00 086 ist eine elektronische Schweißenergiequelle für das Lichtbogenschweißen bekannt, bei der der Regelkreis in einen Statikschaltkreis und einen Dynamikschaltkreis unterteilt ist, mit deren Hilfe der Prozeßarbeitspunkt stabilisiert werden soll, indem entsprechend dem Ausgangssignal des Dynamikschaltkreises die Stromkennlinie des Leistungsteils verändert und der momentane Prozeßarbeitspunkt auf die statische Kennlinie zurückgeführt wird.

Vorrichtungen bzw. Verfahren der eingangs genannten Art weisen den Nachteil auf, daß sie auf den jeweils anzuwendenden Schweißprozeß separat abgeglichen und hinsichtlich der jeweiligen Prozeßparameter optimiert werden müssen. Die Optimierung ist dahingehend begrenzt, daß sie auf dem Konzept der Kennlinien beruht, und daher lediglich in den Approximationsgrenzen der zugrundeliegenden Linearisierung des nichtlinearen Schweißprozesses zu hinreichenden Ergebnissen führt, nicht jedoch die eigentlichen nichtlinearen dynamischen Eigenschaften des Prozesses berücksichtigt.

Aus der US 5 283 418 ist eine Vorrichtung und ein Verfahren für ein Lichtbogenschweißgerät zum Rotorschweißen bekannt, bei dem die herkömmlicherweise durch eine Bedienungsperson erfolgende visuelle Beobachtung einer Schweißnaht durch eine mit einem neuronalen Netzwerk-Computer gekoppelte Videokamera ersetzt wird. Dabei werden bestimmte für ein normales bzw. ein fehlerhaftes Erscheinungsbild der Schweißnaht typische Videobilder aufgezeichnet und dem neuronalen Netzwerk-Computer Bedingungen zum Unterscheiden zwischen normalen und fehlerhaften Zuständen eintrainiert. Aufgrund dieses erlernten Wissens ist die bekannte Regelung in der Lage, automatisch zu unterscheiden, ob es sich um ein normales oder fehlerhaftes Erscheinungsbild handelt. Mittels des bekannten Systems wird dann ein Steuerungssignal zum Abschalten oder Unterbrechen des Prozesses ausgegeben, wenn ein fehlerhaftes Erscheinungsbild des Lichtbogens auftritt.

Der Erfindung liegt davon ausgehend die Aufgabe zugrunde, eine Vorrichtung bzw. ein Verfahren der eingangs genannten Art dahingehend weiterzuentwickeln, daß für beliebige Schweißprozesse bzw. Schweißaufgaben eine Prozeßführung bzw. -regelung in einfacher Weise generierbar ist.

Diese Aufgabe wird bei einer Vorrichtung der eingangs genannten Art dadurch gelöst, daß die Regeleinrichtung durch ein intelligentes Schweißprozeßführungssystem gebildet ist, welches ein mit einem Lernverfahren ausgestattetes Generierungssystem aufweist, in das vorgebbare Güteanforderungen in Bezug auf die Regelung des Schweißprozesses übernehmbar sind, wobei das intelligente Schweißprozeßführungssystem in einer ersten Betriebsart (Trainingsphase) an einen Schweißprozeß koppelbar ist derart, daß selbständig oder durch Ablernen von einem externen Schweißprozeß ein Prozeßführungs- bzw. Regelalgorithmus generierbar und selbständig in der durch das Schweißprozeßführungssystem gebildeten Regelung konfigurierbar ist, und wobei das intelligente Schweißprozeßführungssystem in einer zweiten Betriebsart (Arbeitsphase) als zum Leistungsteil rückgekoppeltes Regelsystem mit dem erlernten Regelverhalten die Prozeßführung durch Vorgabe der Führungsgrößen übernimmt.

Gemäß der verfahrenstechnischen Variante der Erfindung wird diese Aufgabe bei einem Verfahren der eingangs genannten Art dadurch gelöst, daß der ein intelligentes Schweißprozeßführungssystem beinhaltende Regelkreis zunächst in einer Trainingsphase vorgebbare Güteanforderungen bezüglich der Regelung des Schweißprozesses erhält und mittels eines im intelligenten Schweißprozeßführungssystem integrierten ein Lernverfahren enthaltenden Generierungssystems selbständig oder durch Ablernen von einem externen Schweißprozeß einen Prozeßführungs- bzw. Regelalgorithmus erlernt und ebenfalls selbständig in der dem intelligenten Schweißprozeßführungssystem zugeordneten Reglereinheit ablegt solange, bis die vorgegebenen Güteanforderungen erfüllt sind, und daß der Regelkreis anschließend mit dem erlernten Regelverhalten die Prozeßführung durch Vorgabe der Führungsgrößen übernimmt.

Die Erfindung zeichnet sich dadurch aus, daß die herkömmliche Regelung durch das selbstlernende intelligente Schweißprozeßführungssystem ersetzt wird, welches zunächst ein Regelverhalten für den in betracht kommenden Schweißprozeß selbstlernend durch das Generierungssystem in Form eines Regelalgorithmus erzeugt, und anschließend das erlernte Wissen für die Übernahme der Regelaufgabe nutzt, in dem es seine konfigurierbare Regeleinheit mit diesem Algorithmus versieht. Die zunächst nicht festgelegten Regeleigenschaften werden durch Vorgabe der Güteanforderungen für den Schweißprozeß mithilfe des Generierungssystems dadurch generiert, daß dieses mit einer Struktur versehen ist, welche in der Lage ist, den Regelalgorithmus zu repräsentieren. Dies kann z. B. ein geeignetes neuronales Netz oder auch ein Expertensystem sein. Mittels eines eigenen Lernverfahrens und dem dazugehörigen Lernverfahren wird diese Struktur dahingehend adaptiert, daß der somit implementierte Regelalgorithmus den online oder offline von außen an das intelligente Schweißprozeßführungssystem vorgebbaren Güteanforderungen für den zu erlernenden Schweißprozeß entspricht.

Dabei können beliebige für den externen Schweißprozeß charakteristische Prozeßgrößen beobachtet werden, beispielsweise die bekannten Prozeßgrößen wie Strom, Spannung aber auch nichtelektrische Größen, wie optische oder akustische Eigenschaften des Lichtbogens.

Das intelligente Schweißprozeßführungssystem besteht aus dem Generierungssystem und der konfigurierbaren Reglereinheit. Die Beobachtungsgrößen werden in geeigneter Weise codiert, so daß sie für das intelligente Schweißprozeßführungssystem verarbeitbar sind, und dem intelligenten Schweißprozeßführungssystem zugeführt. Das Generierungssystem wiederum besteht aus einer variablen Struktur, so z. B. einem geeignet vorinitialisierten neuronalen Netz und einem dazugehörenden Lernverfahren sowie einem Interface für die Erfassung und Aufbereitung von außen vorgebbarer Güteanforderungen. Mittels des Lernverfahrens wird die variable Struktur so lange verändert, bis diese dann einen speziellen Regelalgorithmus repräsentiert, der auf die Eingabe von Prozeßgrößen mit der Eingabe von Führungsgrößen in der Weise reagiert, daß die an den Schweißprozeß vorgegebenen Güteanforderungen erfüllt werden. Anschließend wird davon ausgegangen, daß diese sogenannte Trainingsphase beendet ist. Die konfigurierbare Regeleinheit wird dann mit dem erlernten Regelalgorithmus versehen. In der anschließenden Arbeitsphase nutzt die Regeleinheit die Kenntnisse aus der Trainingsphase zur Durchführung der Regelungsaufgaben. Sollte während der Arbeitsphase die Notwendigkeit auftreten, die Güteanforderungen zu verändern, so muß das intelligente Schweißprozeßführungssystem lediglich eine weitere Trainingsphase beginnen, um sein Prozeßwissen dahingehend zu erhöhen, daß auch diese neuen Güteanforderungen erfüllt werden.

Aufgrund der offenen Struktur des intelligenten Schweißprozeßführungssystems ist es besonders geeignet, auf nichtlineare Prozeßeigenschaften angemessener zu reagieren als dies lineare Kennlinien-Konzepte vermögen.

Neuronale Netze als solche sind in der Regelungstechnik bekannt (Buch "Neural Networks for Control" Th. Miller, R. Sutton, P. Werbos; MIT Press 1990, US-Patent 5 159 660). Dabei besteht das Generierungssystem aus speziellen vorinitialisierten neuronalen Netzen und den passenden Lernverfahren. Die dort benutzten sogenannten Multi-Layer Feed-Forward Netze konstruieren sich aus mehreren Schichten (Layer), bestehtend aus Neuronen, wobei Neuronen einer Schicht mit jedem Neuron der beiden benachbarten Schichten über Gewichtsmatrizen Wij miteinander gekoppelt sind. Ein Neuron ist dabei durch eine Aktivierungsfunktion fN gekennzeichnet, welche festlegt, wie das Neuron auf ein definiertes Eingangssignal an seinem Ausgang antwortet. Liegt nun ein von außen vorgegebenes Signal an der ersten Schicht, der sogenannten Eingangsschicht, an, so wird dieses schichtweise durch das Netz propagiert, bis es schließlich in der Ausgangsschicht als Antwort des Gesamtnetzes auf den Eingang vorliegt.

Konfigurierbare Parameter eines solchen Netzes sind die Gewichtsmatrizen Wij sowie charakteristische Werte der Übertragungsfunktionen fN eines Neurons. Diese Parameter werden in einer Trainingsphase hinsichtlich des gewünschten Übertragungsverhaltens des neuronalen Netzes durch das Lernverfahren adaptiert. Hierzu wird dem Netz eine Auswahl zu erlernender Eingangssignal-Ausgangssignal-Kombinationen, die sogenannten Trainingssets bzw. Trainingsvektoren, vorgelegt, und das vom Netz berechnete Resultat mit dem gewünschten Sollverhalten verglichen. Der zu dem Lernverfahren gehörende Lernalgorithmus, meist wird hierzu Backpropagation in verschiedensten Ausführungen benutzt, adaptiert daraufhin die Parameter des Netzes solange, bis der mittlere quadratische Fehler der berechneten Ausgabevektoren des Netzes von den Ausgabe-Sollvektoren eine vorgegebene Toleranzschranke unterschreitet.

Nach Beendigung der Lernphase ist das Netz bei sorgfältiger Auswahl der Trainingssets in der Lage, nicht nur für die bereits in diesen Sets enthaltenen Eingänge die korrekte Antwort zu errechnen, sondern auch für neue, während des Trainings nicht benutzte Eingangssignale.

Dabei ist eine geeignete Auswahl von Trainingsvektoren von entscheidender Bedeutung für den Lernerfolg eines neuronalen Netzes. Desweiteren ist die Festlegung der Topologie des Netzes, d.h. die Anzahl der Schichten bzw. die Anzahl der Neuronen pro Schicht, sowie die Übertragungsfunktionen und die exakte Form der Kopplung der Neuronen untereinander ein wesentlicher Faktor. Hier wird in den verschiedenen Varianten der Erfindung das vorhandene Wissen über den Schweißprozeß zur Auswahl dieser Größen ausgenutzt, um ein präinitialisiertes Netz zu erstellen, welches den Trainingserfolg optimal begünstigt.

Bevorzugte Ausführungsformen der Erfindung gehen aus den Unteransprüchen 2 bis 7 hervor.

Die Erfindung wird im folgenden anhand eines Ausführungsbeispieles näher erläutert. Dabei zeigen:
- Fig. 1: ein Blockschaltbild des Ausführungsbeispieles der Erfindung in der Beriebsart "Arbeitsphase"
- Fig. 2: ein Blockschaltbild des Ausführungsbeipsieles der Erfindung in der Betriebsart "Trainingsphase", wobei
- Fig. 2a: das selbständige Erlernen der Regelungsparameter und
- Fig. 2b: das Erlernen der Regelungsparameter von einem vorgebbaren externen Schweißprozeß veranschaulichen.

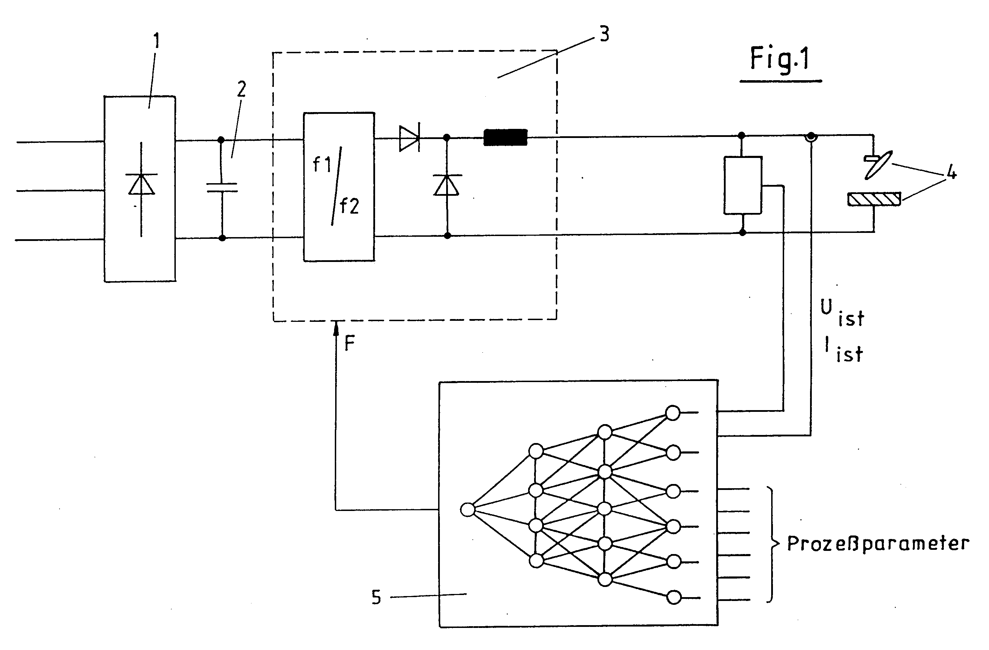

Fig. 1 zeigt einen von einem Ein- oder Dreiphasenwechselstromnetz gespeisten Gleichrichter 1. Der Gleichrichter 1 speist einen einen Zwischenkreis bildenden Kondensator 2, der an das ihm nachgeordnete Leistungsteil 3 angeschlossen ist. Beim Leistungsteil kann es sich sowohl um eine bekannte Inverterstromquelle handeln als auch um jegliche andere Arten von Energiequellen für Schweißprozesse. Ausgangsseitig des Leistungsteiles 3 sind die üblichen Komponenten wie Gleichrichterdiode, Glättungsdrossel und Freilaufdiode vorgesehen. Das Leistungsteil 3 arbeitet auf einen Schweißprozeß 4. Dabei werden die vom Leistungsteil 3 abgegebenen Prozeßgrößen Spannung Uᵢₛₜ und Strom Iᵢₛₜ gemessen und bilden die Eingangsgrößen einer Regelung 5.

Die im folgenden noch zu beschreibende Regelung 5 erhält neben den Prozeßeingangsgrößen Uᵢₛₜ, Iᵢₛₜ auch von außen vorgebbare bzw. einstellbare Prozeßparameter. Die Prozeßparameter sind Elektrodenmaterial, Gas, Drahtdurchmesser, Drahtvorschubgeschwindigkeit oder Stromanstiegsgeschwindigkeit.

Am Ausgang der Regelung 5 werden Führungsgrößen F abgeleitet, die als Sollwert-Vorgabe für den Betrieb des Leistungsteiles 3 dienen.

Die in Fig. 1 in ihrer Arbeitsphase dargestellte Regelung 5 ist gemäß der Erfindung als intelligentes Schweißprozeßführungssystem unter Beinhaltung eines neuronalen Netzwerkes ausgeführt.

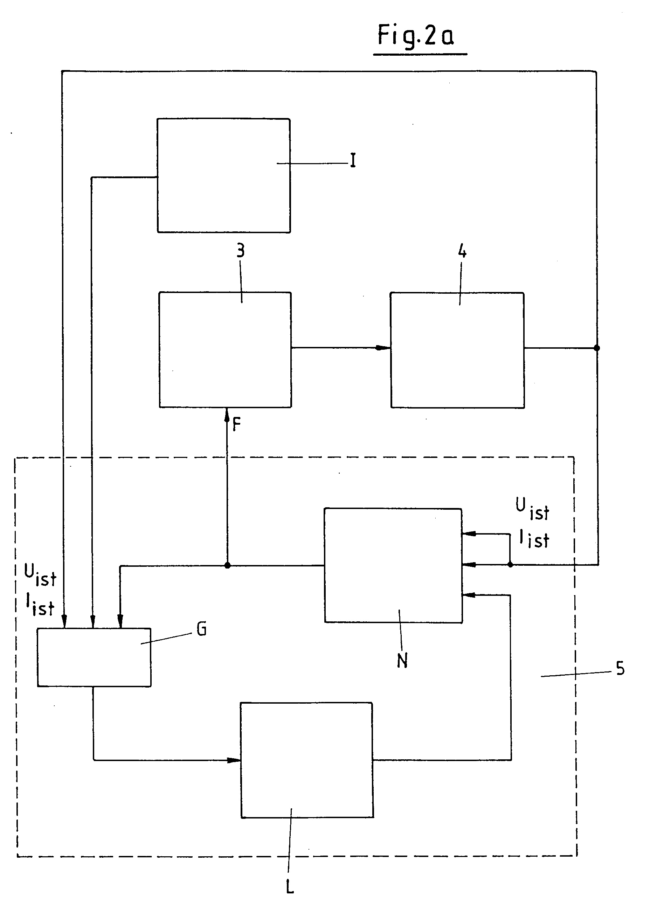

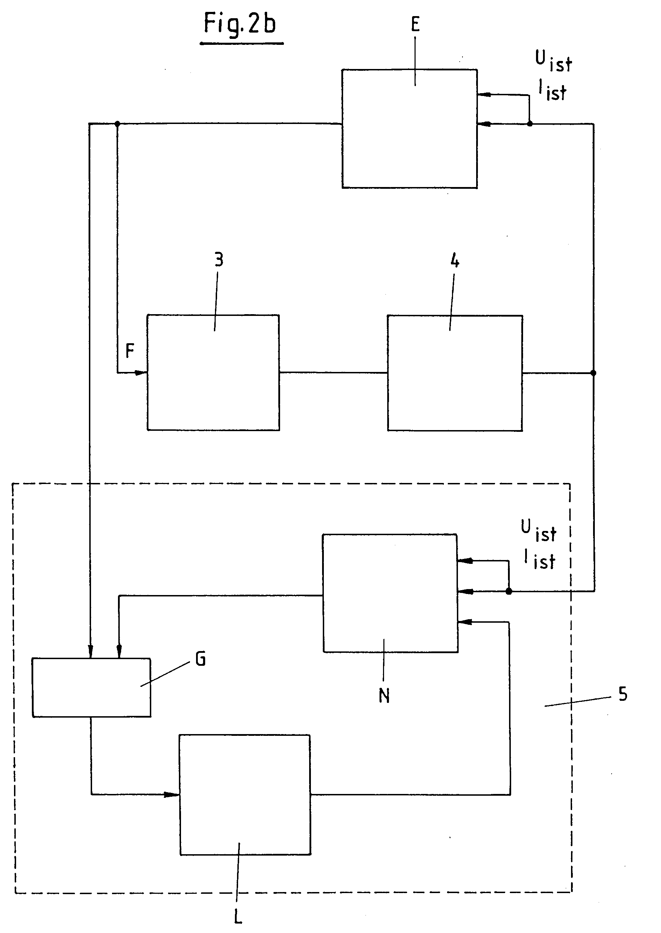

Die Fig. 2a, 2b zeigen das im erfindungsgemäßen Lichtbogenschweißgerät innerhalb der Regelung 5 eingesetzte intelligente Schweißprozeßführungssystem in der der Trainingsphase entsprechenden Beschaltung.

Hierbei ist gemäß Fig. 2a das intelligentes Schweißprozeßführungssystem mit einem Schweißprozeß 4 in der Trainingsphase dadurch gekoppelt, daß die Prozeßgrößen des Schweißprozesses, Spannung und Strom, abgegriffen werden, und daß diese Beobachtungsgrößen nach geeigneter Codierung als Eingangsgrößen für ein Generierungssystem, hier ein geeignet vorinitialisiertes neuronales Netz N, dienen, welchem ein Lernverfahren L zugeordnet ist. Die Ausgangsgrößen des neuronalen Netzes N sind als Führungsgrößen F mit dem Leistungsteil 3 gekoppelt, so daß das Netz N schon während des Trainings aktiv in den Schweißprozeß eingreifen kann. Über das Interface werden dem neuronalen Netz Güteanforderungen G zugeführt. Diese Güteanforderungen beziehen sich auf die zu erzielenden Ergebnisse des Eingriffes des intelligentes Schweißprozeßführungssystems auf den Schweißprozeß. Durch das Generierungssystem, bestehend aus dem vorinitialisierten neuronalen Netz und dem geeigneten Lernverfahren L, wird das System in der Trainingsphase konfiguriert.

Zu Beginn liegt das neuronale Netz in einer Prästruktur vor, die in der Art gestaltet ist, daß das Netz in Bezug auf die Konfigurierbarkeit und die Einsetzbarkeit hinreichend schnell zu Ergebnissen führt. In der Trainingsphase werden dem Netz die Prozeßgrößen (Uᵢₛₜ, Iᵢₛₜ) vom Schweißprozeß zugeführt. Daraufhin liefert das Netz des Generierungssystems Führungsgrößen F, welche an das Generierungssystem und gleichzeitig auch an das Leistungsteil 3 rückgekoppelt werden. Das im Generierungssystem implementierte Lernverfahren L beurteilt unter Verwendung der vorgegebenen Güteanforderungen die vom Netz gelieferten Führungsgrößen F hinsichtlich ihrer Auswirkungen auf die Prozeßgrößen Uᵢₛₜ, Iᵢₛₜ. Aufgrund dieser Beurteilung hinsichtlich ihrer Auswirkungen auf die Prozeßgrößen wird durch das im Generierungssystem implementierte Lernverfahren L die Struktur des neuronalen Netzes N verändert.

Die Auswirkungen des veränderten Netzes N werden wiederum durch das im Generierungssystem implementierte Lernverfahren L bzgl. der Güteanforderungen G beurteilt. Sind diese vorgegebenen Anforderungen erfüllt, ist das Netz trainiert und das gewünschte Regelverhalten selbständig erlernt worden. Danach wird die strukturierbare Reglereinheit mit diesem gefundenen Netz versehen, und kann in der zweiten Betriebsart (Fig. 1) ohne das Generierungssystem selbständig den gewünschten Prozeß regeln.

In der in Fig. 2b dargestellten zweiten Variante der Erfindung wird das intelligente Schweißprozeßführungssystem an einen externen Schweißprozeß E gekoppelt, wobei dieser mit einer festgelegten Prozeßführungseinheit ausgestattet ist. Dies kann z. B. ein vorgegebenes hardware- oder softwaretechnisch implementiertes Regelverfahren sein, oder auch spezielle Fähigkeiten eines Schweißexperten. Das intelligente Schweißprozeßführungssystem übernimmt nun die Aufgabe, diese externe Prozeßführung zu erlernen (trainieren) und in einem zweiten Schritt zu übernehmen. D.h., die dem Generierungssystem vorgegebene Güteanforderung lautet: "Generierung eines neuronalen Netzes, so daß die Regelung durch das neuronale Netz minimal von der externen Regelung abweicht.

Gemäß der in Fig. 2b dargestellten Variante der Erfindung werden dazu in einer ersten Betriebsart die dem externen Schweißprozeß zugeleiteten Größen (Uᵢₛₜ, Iᵢₛₜ) der Struktur des Generierungssystem, hier wiederum einem vorinitialisierten neuronalen Netz N, nach geeigneter Codierung als Eingangsgrößen präsentiert. Diese Codierung besteht unter anderem in einer Auswahl der relevanten Trainingsvektoren für das Netz. Danach werden die von der Prozeßführung berechneten Führungswerte F mit den Ausgangswerten des Netzes N verglichen, und aus der bestehenden Sollabweichung mittels des Backpropagation-Lernalgorithmus des Lernverfahrens die Parameter des Netzes solange adaptiert, bis diese Abweichung genügend klein ist.

Die Trainingsphase kann dabei sowohl während des Schweißprozesses, als auch off-line nach geeigneter Datenaufnahme erfolgen. Das Prozeßwissen der externen Prozeßführung ist danach vollständig im neuronalen Netz implementiert, d.h. der Regelalgorithmus ist erlernt worden.

Anschließend kann die strukturierbare Regeleinheit 5 mit diesem Netz N versehen werden, womit in einer zweiten Betriebsart die Regelungsaufgabe durch das intelligente Schweißprozeßführungssystem vollständig übernommen werden kann. Zusätzlich können dem Netz externe Parameter des Schweißprozesses zugeführt werden, so z.B. Drahtdurchmesser, Materialart, Gasart etc., wobei das Netz den Einfluß dieser Parameter auf die Prozeßführung erlernt, und in der zweiten Betriebsart den Regelalgorithmus automatisch an diese von außen einstellbaren Parameter anpaßt. Die Generalisierungsfähigkeiten des neuronalen Netzes ermöglichen hierbei eine erfolgreiche Prozeßführung, auch für nicht explizit geschweißte (vorkonfigurierte) Draht-, Material- und Gaskombinationen.

Der Vorteil dieser Lösung liegt insbesondere darin, daß praktisch beliebige Schweißprozesse nachgebildet werden können und das System aufgrund des Erlernens des Schweißprozesses anschließend selbsttätige Entscheidungsprozesse durchführen kann, um beispielsweise die Kenntnisse, die es aufgrund der Trainingsphase an einem bestimmten Drahtdurchmesser erworben hat, auch auf andere Drahtdurchmesser anzuwenden.

Alternativ zu der in Fig. 2a/b dargestellten Lösung kann als zu beobachtende Prozeßgröße auch das optische oder akustische Erscheinungsbild des Lichtbogens untersucht werden. Auch hier kann in einer Trainingsphase das neuronale Netzwerk so konfiguriert werden, daß in der anschließenden Arbeitsphase auf das erlernte Wissen zurückgegriffen werden kann.

## Patentansprüche

1. Lichtbogenschweißgerät mit einem wechselstromgespeisten Gleichrichter (1), der über einen Zwischenkreis (2) ein Leistungsteil (3) versorgt, dem Führungsgrößen (F) vorgebbar sind, wobei das Leistungsteil als Energiequelle zur Versorgung des Schweißprozesses (4) mit Prozeßgrößen (Uᵢₛₜ,Iᵢₛₜ) arbeitet und wobei unter Berücksichtigung der gemessenen Prozeßgrößen (Uᵢₛₜ,Iᵢₛₜ) und von Prozeßparametern die Führungsgrößen (F) über eine Regeleinrichtung vorgebbar sind, **dadurch gekennzeichnet**, daß die Regeleinrichtung durch ein intelligentes Schweißprozeßführungssystem (5) gebildet ist, welches ein mit einem Lernverfahren (L) ausgestattetes Generierungssystem (N) aufweist, in das vorgebbare Güteanforderungen (G) in Bezug auf die Regelung des Schweißprozesses übernehmbar sind, wobei das intelligente Schweißprozeßführungssystem (5) in einer ersten Betriebsart (Trainingsphase) an einen Schweißprozeß (4) koppelbar ist derart, daß selbständig oder durch Ablernen von einem externen Schweißprozeß (E) ein Prozeßführungs-bzw. Regelalgorithmus generierbar und selbständig in der durch das Schweißprozeßführungssystem gebildeten Regelung konfigurierbar ist, und wobei das intelligente Schweißprozeßführungssystem (5) in einer zweiten Betriebsart (Arbeitsphase) als zum Leistungsteil (3) rückgekoppeltes Regelsystem mit dem erlernten Regelverhalten die Prozeßführung durch Vorgabe der Führungsgrößen (F) übernimmt.

2. Lichtbogenschweißgerät nach Aspruch 1,
**dadurch gekennzeichnet**, daß die Prozeßparameter Elektrodenmaterial, Gas, Drahtdurchmesser, Drahtvorschubgeschwindigkeit oder Stromanstiegsgeschwindigkeit sind.

3. Lichtbogenschweißgerät nach Anspruch 1 oder 2,
**dadurch gekennzeichnet**, daß die Prozeßparameter Lichtbogenlänge, Tropfengröße oder das emittierte akustische und/oder optische Spektrum sind, die als Signale mittels Audio- bzw. Bildverarbeitung aufbereitet werden.

4. Lichtbogenschweißgerät nach einem der vorhergehenden Ansprüche,
**dadurch gekennzeichnet**, daß das intelligente Schweißprozeßführungssystem ein neuronales Netz beinhaltet.

5. Lichtbogenschweißgerät nach einem der vorhergehenden Ansprüche,
**dadurch gekennzeichnet**, daß das intelligente Schweißprozeßführungssystem ein neuronales Fuzzy-System beinhaltet.

6. Lichtbogenschweißgerät nach einem der vorhergehenden Ansprüche,
**dadurch gekennzeichnet**, daß das intelligente Schweißprozeßführungssystem durch ein Expertensystem trainierbar ist.

7. Lichtbogenschweißgerät nach einem der vorhergehenden Ansprüche,
**dadurch gekennzeichnet**, daß das intelligente Schweißprozeßführungssystem genetische Algorithmen enthält.

8. Verfahren zum Betrieb eines Lichtbogenschweißgerätes, bei dem über einen wechselstromgespeisten Gleichrichter ein Leistungsteil zur Versorgung des Schweißprozesses arbeitet, dessen als Istwerte (Uᵢₛₜ,Iᵢₛₜ) erfaßte Prozeßgrößen die Eingangsgrößen eines Regelkreises bilden, dessen Ausgangsgrößen unter Berücksichtigung vorgebbarer Prozeßparameter die Führungsgrößen (F) für das Leistungsteil darstellen,
**dadurch gekennzeichnet**, daß der ein intelligentes Schweißprozeßführungssystem (5) beinhaltende Regelkreis zunächst in einer Trainingsphase vorgebbare Güteanforderungen bezüglich der Regelung des Schweißprozesses erhält, und mittels eines im intelligenten Schweißprozeßführungssystem (5) integrierten ein Lernverfahren (L) enthaltenden Generierungssystems (N) selbständig einen Prozeßführungs-bzw. Regelalgorithmus erlernt und ebenfalls selbständig in der dem intelligenten Schweißprozeßführungssystem (5) zugeordneten Reglereinheit ablegt solange, bis die vorgegebenen Güteanforderungen erfüllt sind, und daß der Regelkreis anschließend mit dem erlernten Regelverhalten die Prozeßführung durch Vorgabe der Führungsgrößen (5) übernimmt.

9. Verfahren zum Betrieb eines Lichtbogenschweißgerätes, bei dem über einen wechselstromgespeisten Gleichrichter ein Leistungsteil zur Versorgung des Schweißprozesses arbeitet, dessen als Istwerte (Uᵢₛₜ,Iᵢₛₜ) erfaßte Prozeßgrößen die Eingangsgrößen eines Regelkreises bilden, dessen Ausgangsgrößen unter Berücksichtigung vorgebbarer Prozeßparameter die Führungsgrößen für das Leistungsteil darstellen,
**dadurch gekennzeichnet**, daß der ein intelligentes Schweißprozeßführungssystem (5) beinhaltende Regelkreis zunächst in einer Trainingsphase vorgebbare Güteanforderungen bezüglich der Regelung des Schweißprozesses erhält, und mittels eines im intelligenten Schweißprozeßführungssystem (5) integrierten ein Lernverfahren (L) enthaltenden Generierungssystems anhand eines vorgebbaren externen Schweißprozesses (E) einen Prozeßführungs- bzw. Regelalgorithmus erlernt und selbständig in der dem intelligenten Schweißprozeßführungssystem (5) zugeordneten Reglereinheit ablegt solange, bis die vorgegebenen Güteanforderungen erfüllt sind, und daß der Regelkreis anschließend mit dem erlernten Regelverhalten die Prozeßführung durch Vorgabe der Führungsgrößen (5) übernimmt.
